Europäisches Patentamt

European Patent Office

Office européen des brevets

(19)

(11) Publication number: **0 430 427 A2**

## (12) EUROPEAN PATENT APPLICATION

(21) Application number: **90311606.9**

(22) Date of filing: **23.10.90**

(51) Int. Cl.5: **G11B 20/10**

(30) Priority: **25.11.89 JP 305882/89**

(43) Date of publication of application:
**05.06.91 Bulletin 91/23**

(84) Designated Contracting States:
**DE FR GB Bulletin**

(71) Applicant: **SONY CORPORATION**
**7-35 Kitashinagawa 6-Chome Shinagawa-ku**
**Tokyo 141(JP)**

(72) Inventor: **Fukuda, Shinichi, c/o Patents**
**Division**
**Sony Corporation, 6-7-35 Kitashinagawa**
**Shinagawa-ku, Tokyo 141(JP)**

(74) Representative: **Thomas, Christopher Hugo et**
**al**
**D Young & Co 10 Staple Inn**
**London WC1V 7RD(GB)**

(54) **Digital signal equalizing circuits.**

(57) In a digital signal equalizing circuit (10) a differentiating/integrating circuit (14, 12), a phase-shifting circuit (18) and a low-pass filter circuit (20) are connected in series, whereby a desired frequency characteristic is produced in the whole of a recording and reproducing system.

# FIG. 5

EP 0 430 427 A2

# DIGITAL SIGNAL EQUALIZING CIRCUITS

This invention relates to digital signal equalizing circuits for magnetic reproducing apparatus, for example, for reproducing a digital audio signal.

In a magnetic recording and reproducing apparatus for recording and reproducing a digital audio signal by using a rotary drum, a wave form equalizing circuit is used to correct a frequency characteristic of the reproduced signal, so that a desired frequency characteristic can be obtained as the frequency characteristic of the whole of the recording and reproducing system of the apparatus.

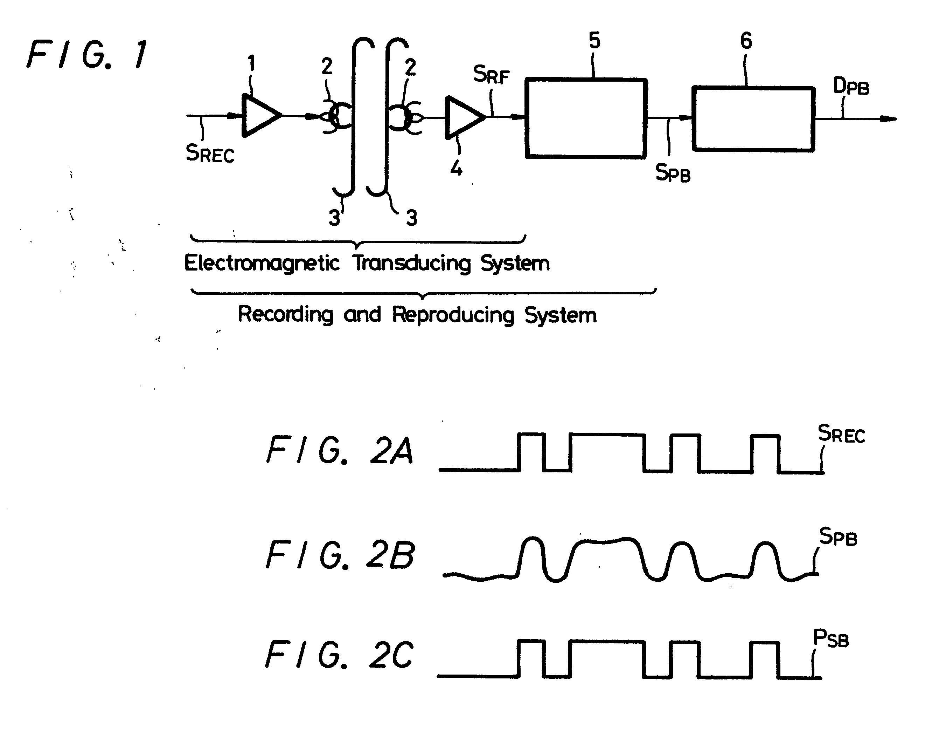

As shown in Figure 1, in a magnetic recording and reproducing apparatus, a record signal $S_{REC}$ is amplified to a predetermined signal level by a recording amplifier circuit 1, and is then fed to a magnetic head 2, whereby desired information is recorded on a magnetic tape 3.

In the reproducing system, a reproduced signal $S_{RF}$ reproduced from the tape 3 by the head 2 is amplified by a playback amplifier circuit 4, and is then fed to a waveform equalizing circuit 5. The waveform equalizing circuit 5 corrects the frequency characteristics of the recording amplifier circuit 1, the head 2, the tape 3 and the playback amplifier circuit 4 forming an electromagnetic transducing system to make the frequency characteristic of the reproduced signal $S_{RF}$ the same as the frequency characteristic of the recording signal $S_{REC}$

The reproduced signal from the waveform equalizing circuit 5 is supplied to a comparing circuit 6, whereby reproduced data $D_{PB}$ can be demodulated under the condition that the frequency characteristic of the reproduced signal $S_{RF}$ is corrected.

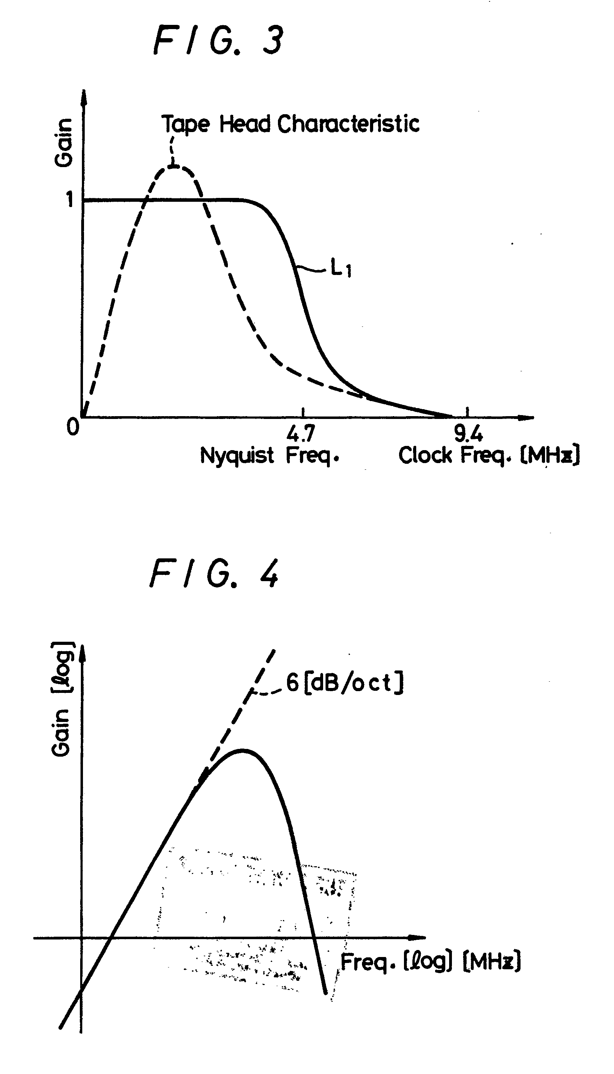

As shown in Figure 2, in a digital audio tape recorder, serial data processed by non-return to zero inverted (NRZI) coding is directly supplied to the recording amplifier circuit 1, and the resultant recording signal $S_{REC}$ (see Figure 2A) is recorded on the tape 3. In this case, if the frequency characteristic of the whole of the recording and reproducing system is set to a frequency characteristic substantially the same as that of an ideal filter as shown by reference letter $L_1$ in Figure 3, the data can be accurately reproduced.

In other words, if the above frequency characteristic is set to a frequency characteristic substantially the same as that of an ideal filter, waveform distortion can be effectively avoided and a reproduced signal $S_{PB}$ - (see Figure 3B) having a waveform approximate to that of the recording signal $S_{REC}$ can be obtained. Thus, the occurrence of transmission error can be effectively avoided and accurate reproduced data $D_{PB}$ (see Figure 3C) can be obtained.

In actual practice, as shown in Figure 4, the electromagnetic transducing system has a differential characteristic in the low frequency band, and the amplitude characteristic thereof is lowered at 6 dB/oct.

Moreover, in the high frequency band, the above amplitude characteristic is rapidly lowered due to a magnetic head loss or the like, and the phase is changed by 90 degrees.

Therefore, in the electromagnetic transducing system, if the amplitude characteristic is expressed using a straight line coordinate system, as shown by a dashed line in Figure 3, the amplitude characteristic thereof becomes considerably different from that of an ideal filter.

According to the invention there is provided a digital signal equalizing circuit for a magnetic reproducing apparatus, the equalizing circuit comprising:
a differentiating and integrating circuit in which an input signal is supplied to a differentiating circuit and an integrating circuit in parallel, and output signals of said differentiating circuit and said integrating circuit are subtracted from each other;
a phase-shifting circuit; and
a low-pass filter circuit;
said differentiating and integrating circuit, said phase-shifting circuit and said low-pass filter circuit being connected in series.

Thus an embodiment of the present invention comprises a digital signal equalizing circuit in which a differentiating/integrating circuit, a phase-shifting circuit and a low-pass filter circuit are connected in series, whereby a desired frequency characteristic is produced in the whole of a recording and reproducing system.

The invention will now be described by way of example with reference to the accompanying drawings, throughout which like parts are referred to by like references, and in which:

Figure 1 is a block diagram showing the overall arrangement of a known recording and reproducing system;

Figures 2A, 2B and 2C are waveform diagrams of signals in the system of Figure 1;

Figures 3 and 4 are characteristic graphs used to explain the operation of the system of Figure 1;

Figure 5 is a block diagram showing an embodiment of digital signal equalizing circuit according to the

2

present invention;

Figure 6 is a frequency characteristic of a differentiating and integrating circuit used in the embodiment;

Figure 7 is a frequency characteristio of a low-pass filter circuit used in the embodiment; and

Figures 8 and 9 are further graphs.

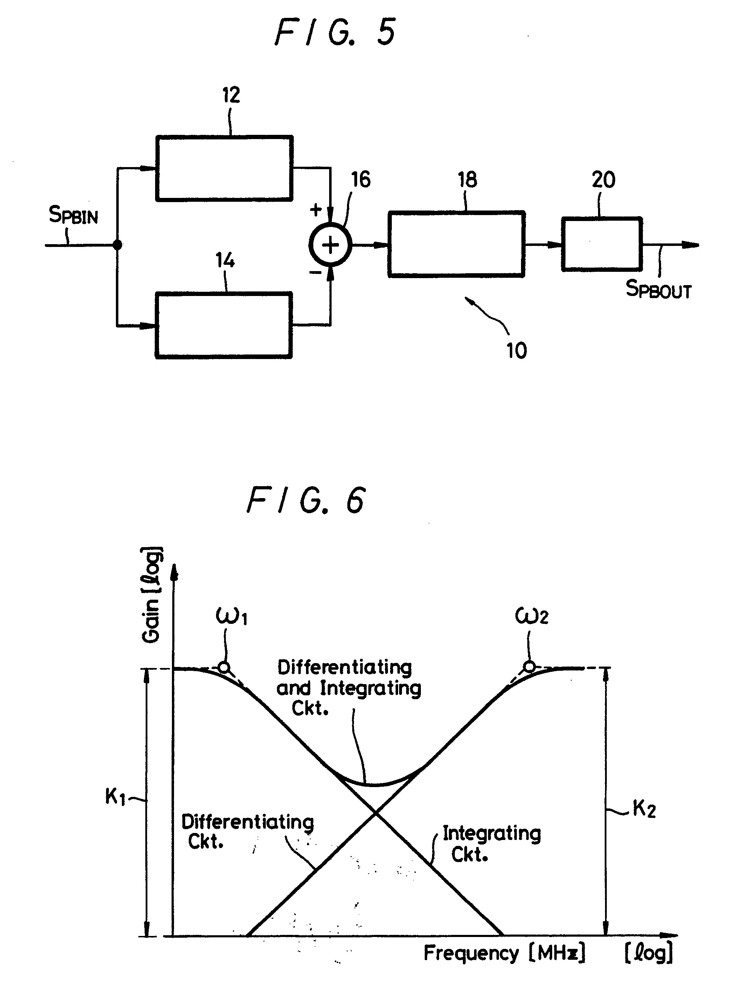

Figure 5 shows an embodiment of waveform equalizing circuit 10 in which a reproduced signal $S_{PBIN}$ from a playback amplifier circuit 4 (see Figure 1) is supplied to an integrating circuit 12 and to a differentiating circuit 14. The integrating circuit 12 is a primary integrating circuit whose frequency characteristic is set to be expressed by the following equation:

$$H_{s(s)} = \frac{K_1 \omega_1}{S + \omega_1} \qquad \ldots\ldots(1)$$

Accordingly, as shown in Figure 2, the amplitude characteristic of the integrating circuit 12 is attenuated by -6 dB/oct in the frequency band higher than the frequency $\omega_1$.

The differentiating circuit 14 is a primary differentiating circuit having the same order as that of the integrating circuit 12, and the frequency characteristic thereof is set to be expressed by the following equation:

$$H_{s(s)} = \frac{K_2 \omega_2}{S + \omega_2} \qquad \ldots\ldots(2)$$

Accordingly, the amplitude characteristic of the differentiating circuit 14 is attenuated by -6 dB/oct in the frequency band lower than the frequency $\omega_2$.

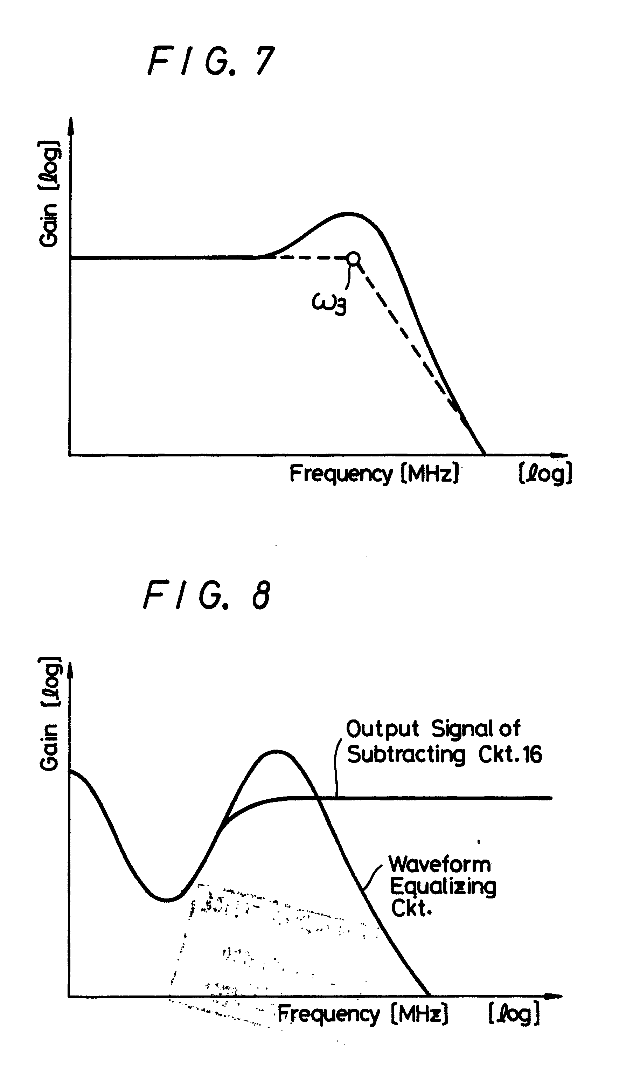

A subtracting circuit 16 subtracts an output signal of the differentiating circuit 14 from an output signal of the integrating circuit 12 and supplies a subtracted signal to a phase-shifting circuit 18. Thus, the subtracting circuit 16 derives an output signal having substantially an intermediate frequency between the frequencies $\omega_1$ and $\omega_2$ and whose amplitude is attenuated (see Figure 6).

At that time, in the integrating circuit 12 and the differentiating circuit 14, the phases of the signals are respectively changed by -90 and +90 degrees in the frequency band in which the amplitude characteristic is attenuated, so that, in the output signal from the subtracting circuit 16, the change of the phase can be complementarily compensated for, resulting in an output signal having the same phase characteristic as that of the reproduced signal $S_{PBIN}$ being produced.

The phase-shifting circuit 18 phase-shifts the output signal of the subtracting circuit 16 by a predetermined phase as represented by the following equation:

$$H_{1(s)} = \frac{S - \omega_4}{S + \omega_4} \qquad \ldots\ldots(3)$$

A low-pass filter circuit (LPF) 20 comprises a quaternary LPF as represented by the following equation and limits the band of the output signal of the phase-shifting circuit 18:

$$H_{L(s)} = \frac{\omega_3{}^4}{(S^2 + \dfrac{\omega_3}{Q_1} S + \omega_3{}^2)(S^2 + \dfrac{\omega_3}{Q_2} S + \omega_3{}^2)}$$

$$\dots(4)$$

As shown in Figure 3, the frequency characteristics of the LPF 20 is selected so as to generate a peak level in the high band, and the phase change, caused by the LPF 20, is compensated for by the phase-shifting circuit 18.

Thus, the waveform equalizing circuit 10 presents a frequency characteristic $H_{(s)}$ expressed by the following equation:

$$H(s) = (\frac{K_1 \omega_1}{S + \omega_1} - \frac{K_2 S}{S + \omega_2})$$

$$\bullet \frac{\omega_3}{(S^2 + \dfrac{\omega_3}{Q_1} S + \omega_3{}^2)(S^2 + \dfrac{\omega_3}{Q_2} S + \omega_3{}^2)}$$

$$\bullet \frac{S - \omega_4}{S + \omega_4}$$

$$\dots(5)$$

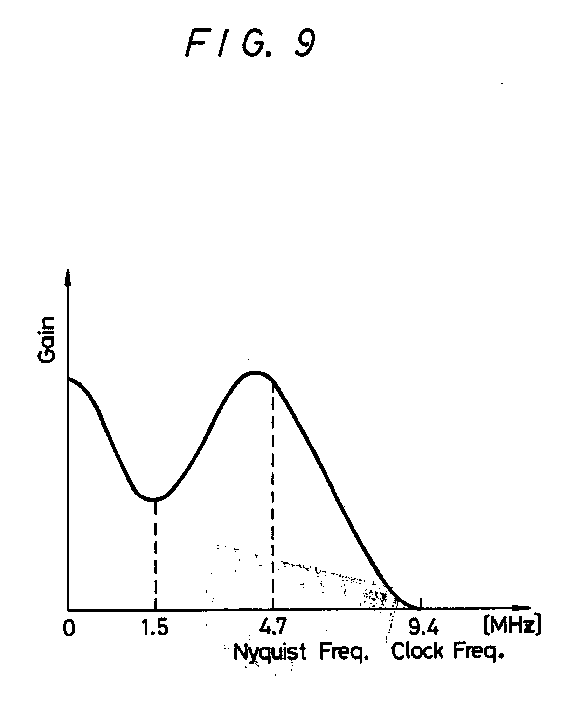

Therefore, the frequency characteristic of the waveform equalizing circuit 10 is selected such that, as shown Figures 8 and 9, the output signal of the subtracting circuit 16 is band-limited by the LPF 20, whereby the gain reaches a peak level near the frequency of 4.7 MHz (the Nyquist frequency) after the amplitude characteristic has decreased to a minimum at the frequency of substantially 1.5 MHz, and the gain is reduced substantially to zero at the frequency 9.4 MHz (that is the clock frequency, which is twice as high as the Nyquist frequency).

More specifically, when the frequency characteristic of the overall recording and reproducing system is set to a frequency characteristic substantially the same as that of an ideal filter, the frequency characteristic $H_{(s)}$ of the waveform equalizing circuit must be selected to be the frequency characteristics $H_{(s)}$ expressed by the following equation:

$$H_{(s)} = \frac{H_R(s)}{H_D(s)} \qquad \dots(6)$$

$H_R(s)$ and $H_D(s)$ represent the frequency characteristic of the ideal filter and the frequency characteristic of the electromagnetic transducing system, respectively.

In this case, because the ideal filter presents the frequency characteristic $H_{R(s)}$ which is flat in the frequency band lower than the Nyquist frequency and which is attenuated in the frequency band higher than the Nyquist frequency (see Figure 3), and the electromagnetic transducing system presents the frequency characteristic $H_{D(s)}$ whose gain is attenuated in the high and low frequency bands, the frequency characteristic $H_{(s)}$ of the waveform equalizing circuit expressed by the equation (6) is approximated to the frequency characteristic represented in Figure 9.

That is, as seen in this embodiment, if the frequency characteristic of the waveform equalizing circuit is set so that the amplitude characteristic has the peak level near the Nyquist frequency and the amplitude characteristic is temporarily lowered near the frequency, 1.5 MHz, that is, lower than the Nyquist frequency, then the frequency characteristic of the overall recording and reproducing system can be determined to be a frequency characteristic quite similar to that of an ideal filter.

In this embodiment, the output signal of the differentiating circuit 14 is subtracted from the output signal of the integrating circuit 12, whereby the amplitude characteristic of the waveform equalizing circuit is temporarily lowered near the frequency 1.5 MHz.

Moreover, the output signal of the subtracting circuit 16 is limited in band by the quaternary LPF 20 to compensate for the overall frequency characteristic. Thus, the amplitude characteristic has a peak level near the Nyquist frequency.

Moreover, the output signal of the differentiating circuit 14 is subtracted from the output signal of the integrating circuit 12 temporarily to compensate for the phase changes of the output signals of the integrating circuit 12 and the differentiating circuit 14, so that, even when the amplitude characteristic is attenuated near the frequency of 1.5 MHz, the subtracting circuit 16 can derive a subtracted signal having a flat phase.

When the output signal of the subtracting signal 16 is limited in band by the LPF 20 to compensate for the overall amplitude characteristic, if the phase change, caused in compensating for the amplitude characteristic, is compensated for by the phase-shifting circuit 18, then the phase shift can be effectively avoided, and a frequency characteristic substantially the same as that of an ideal filter can be obtained.

Consequently, in this embodiment, the integrating circuit 12, the differentiating circuit 14 and the subtracting circuit 16 form a differentiating/integrating circuit, wherein the differentiating circuit 14 and the integrating circuit 12 receive the input signal $S_{PBIN}$ in parallel and the output signal of the differentiating circuit 14 is subtracted from the output signal of the integrating circuit 12.

In the above-described arrangement, the reproduced signal $S_{PBIN}$ from the playback amplifier circuit 4 is subtracted by the subtracting circuit 16 via the integrating circuit 12 and the differentiating circuit 14, and is thereby corrected to form the reproduced signal in which the amplitude characteristic thereof is increased in the high band after being temporarily lowered near the frequency of 1.5 MHz.

The output signal from the subtracting circuit 16 is phase corrected in advance by the phase-shifting circuit 18 and the phase thereof is changed by that phase amount by the LPF 20, so being produced with a flat phase characteristic.

The amplitude characteristics of the reproduced signal $S_{PBIN}$ is compensated so as to have a peak level near the Nyquist frequency (4.7 MHz) by the LPF 20, whereby the whole frequency characteristic of the recording and reproducing system is corrected to be substantially the frequency characteristic of the ideal filter.

With this arrangement, since the frequency characteristic of the reproduced signal $S_{PBIN}$ is sequentially compensated for by the differentiating/integrating circuit, the phase-shifting circuit and the LPF, it is possible to obtain a frequency characteristic approximate to that of an ideal filter in the whole of the recording and reproducing system.

While in the above described embodiment the primary integrating circuit and the primary differentiating circuit are used, the invention is not limited thereto. In short, if the orders of the integrating circuit and the differentiating circuit are made equal, then the phase characteristics can be made flat, and frequency characteristic approximate to that of an ideal filter can be obtained.

When the phase characteristic can be determined as a desired characteristic, this can be realized by making the orders of the integrating circuit and the differentiating circuit different.

While in the embodiment the quaternary LPF is employed as described above, the invention is not limited thereto and LPFs having various orders can be used, if necessary.

Moreover, while in the above embodiment the differentiating/integrating circuit, the phase-shifting circuit and the low-pass filter circuit are connected in series in that order, the invention is not limited thereto, and the order thereof may be changed if necessary.

Further, while in the above embodiment the invention is applied to a digital audio tape recorded having a Nyquist frequency of 4.7 MHz, so that a frequency characteristic approximate to that of an ideal filter is obtained in the whole of the recording and reproducing system, the invention is not limited to the frequency characteristic of an ideal filter and can be widely applied to the case in which the whole of the recording and reproducing system is set to a desired frequency characteristic.

Furthermore, while the above embodiment the invention is applied to a digital audio tape recorded so as to record a signal processed by the NRZI-coding method, the invention is not limited thereto and can be widely applied to a magnetic reproducing apparatus for reproducing various digital signals.

**Claims**

1. A digital signal equalizing circuit (10) for a magnetic reproducing apparatus, the equalizing circuit (10) comprising: a differentiating and integrating circuit (14, 12) in which an input signal is supplied to a differentiating circuit (14) and an integrating circuit (12) in parallel, and output signals of said differentiating circuit (14) and said integrating circuit (12) are subtracted from each other;
a phaseshifting circuit (18); and
a low-pass filter circuit (20);
said differentiating and integrating circuit (14, 12), said phase-shifting circuit (18) and said low-pass filter circuit (20) being connected in series.

2. An equalizing circuit (10) according to claim 1 wherein said integrating circuit (12) is a primary integrating circuit (12).

3. An equalizing circuit (10) according to claim 1 or claim 2, wherein said differentiating circuit (14) is a primary differentiating circuit (14).

4. An equalizing circuit (10) according to claim 1, claim 2 or claim 3 wherein said differentiating and integrating circuit (14, 12) includes a subtracting circuit (16) which subtracts an output signal of said differentiating circuit (14) from an output signal of said integrating circuit (12).

5. An equalizing circuit (10) according to any one of the preceding claims wherein the crder of said differentiating circuit (14) is equal to that of said integrating circuit (12).

6 An equalizing circuit (10) according to any one of the preceding claims wherein said low-pass filter (20) is a quaternary low-pass filter (20).

# FIG. 1

Electromagnetic Transducing System

Recording and Reproducing System

EP 0 430 427 A2

FIG. 2A  $S_{REC}$

FIG. 2B  $S_{PB}$

FIG. 2C  $P_{SB}$

# F I G. 3

Tape Head Characteristic

Gain

1

L₁

0    4.7    9.4

Nyquist Freq.    Clock Freq. [MHz]

# F I G. 4

Gain [log]

6 [dB/oct]

Freq. [log] [MHz]

# F I G. 5

# F I G. 6

# F I G. 7

# F I G. 8

# F I G. 9